# EUROPÄISCHE PATENTSCHRIFT

(11) **EP 1 818 844 B1**
(45) Veröffentlichungstag und Bekanntmachung des Hinweises auf die Patenterteilung: **13.03.2013**
(21) Anmeldenummer: 06002770.3
(22) Anmeldetag: 10.02.2006
(51) Int. Cl.: G06F 21/00

(54) **Verfahren zur Benutzung von Sicherheitstoken**
Method for using security tokens
Procédé destiné à l'utilisation de mécanismes de sécurité

(43) Veröffentlichungstag der Anmeldung: 15.08.2007
(73) Patentinhaber: Secunet Security Networks Aktiengesellschaft, 45128 Essen (DE)
(72) Erfinder: Baumgart, Rainer Hans Friedrich Dr., 57271 Hilchenbach (DE); Demsky, Uwe, 58239 Schwerte (DE); Martius, Kai Dr., 01738 Dorfhain (DE); Besch, Matthias Dr., 81667 München (DE)
(74) Vertreter: Rohmann, Michael

(56) Entgegenhaltungen:
- EP-A- 0 587 375
- US-A- 5 844 497
- US-A- 6 087 955
- US-B1- 6 268 788
- "VMware Workstation 5.5.1 Benutzerhandbuch" [Online] 20. Dezember 2005 (2005-12-20), VMWARE, INC. , XP002385146 Gefunden im Internet: URL:http://www.vmware.com/de/pdf/ws55_manu al_de.pdf> [gefunden am 2006-06-12] * Seite 113 * * Seite 37 * * Seite 35 *

## Beschreibung

Die Erfindung betrifft ein Verfahren zur Benutzung von Sicherheitstoken. - Mit dem Begriff Sicherheitstoken sind im Rahmen der Erfindung Komponenten gemeint, auf denen Informationen bzw. Daten gespeichert sind, die nur nach einem vorhergehenden Identifikations- bzw. Authentisierungsverfahren zugänglich bzw. einlesbar sind. Sicherheitstoken meint insbesondere Komponenten, aus denen normalerweise keine Informationen bzw. Daten herauskopiert werden können bzw. deren Daten nicht manipuliert werden können. Der Begriff Sicherheitstoken umfasst vor allem Chipkarten wie Smart Cards sowie entsprechende USB-Sticks, USB-Crypto-Token und dergleichen.

Die Benutzung von Sicherheitstoken, insbesondere von Chipkarten ist aus der Praxis hinlänglich bekannt, vor allem die Benutzung von Chipkarten für das Internet-Banking. Dabei wird eine Chipkarte in ein Lesegerät eingeführt und der Benutzer muss einen Authentisierungscode über eine Eingabeeinheit bzw. über eine Tastatur eingeben. Dabei handelt es sich um eine geheime bzw. vertrauliche Information, die insbesondere in Form einer Personal Information Number (PIN) eingegeben, an die Chipkarte weitergeleitet und von der Chipkarte verifiziert wird. Weiterhin ist aus US 5,844,497 eine Vorrichtung bekannt, bei der zum Ausführen eines auf dem Computer gespeicherten Programms ein Zugangscode eingegeben werden muss. Dieser Zugangscode wird mit einem auf einer Karte bzw. Speicherkarte abgespeicherten Zugangscode verglichen, wobei das Programm nur dann gestartet werden kann, wenn der eingegebene Code mit dem auf der Karte gespeicherten Code übereinstimmt.

Wenn die Eingabeeinheit bzw. Tastatur nicht unmittelbar mit dem Lesegerät und somit nicht unmittelbar mit der Chipkarte verbunden ist, besteht die Gefahr, dass die vertraulichen Informationen auf dem Weg von der Eingabeeinheit zum Lesegerät von Dritten eingesehen bzw. eingelesen werden. Die Ursache für den Verlust der vertraulichen Informationen können manipulierte Eingabeeinheiten, fehlerhafte bzw. veränderte Software (Trojaner) oder dergleichen sein. Aus diesem Grunde werden in der Praxis aus Sicherheitsgründen Lesegeräte für Chipkarten eingesetzt, die in der Regel sowohl eine Eingabeeinheit (Tastatur) als auch eine Anzeigeeinrichtung bzw. ein Display integriert enthalten. Diese Lesegeräte sind aufwendig aufgebaut und relativ kostspielig.

Weiterhin sind aus "VMware Workstation 5.5.1 Benutzerhandbuch" [Online] 20. Dezember 2005 (2005-12-20), VMWARE, INC., XP002385146 virtuelle Maschinen bekannt, die auf einem Computer installiert und verwaltet werden können. Es hat sich bewährt, virtuelle Maschinen als Testumgebung für neuentwickelte Software einzusetzen. Die auf der virtuellen Maschine ablaufenden, neuentwickelten Programme greifen dabei nicht auf das Betriebssystem des Computers zu.

Demgegenüber liegt der Erfindung das technische Problem zugrunde, ein Verfahren der eingangs genannten Art anzugeben, das funktionssicher durchführbar ist, das vor allem allen Sicherheitsanforderungen genügt und das nichtsdestoweniger kostengünstig realisierbar ist.

Zur Lösung dieses technischen Problems lehrt die Erfindung Verfahren zur Benutzung von Sicherheitstoken, wobei ein Sicherheitstoken in Datenübertragungsverbindung mit einer Leseeinrichtung gebracht wird, wobei die Leseeinrichtung in Datenübertragungsverbindung mit einem Computer steht,
wobei auf dem Computer eine virtuelle Maschine vorübergehend installiert wird, wobei diese virtuelle Maschine ein virtuelles Betriebssystem umfasst,
wobei die auf dem Computer zu installierende virtuelle Maschine eine für die Token-Leseanwendung separate Systemplattform bereitstellt,
wobei die virtuelle Maschine ausschließlich für die Wechselwirkung bzw, für den Datenaustausch mit dem Sicherheitstoken zur Verfügung steht,
wobei ein Identifikations- und/oder Authentisierungscode über ein Peripheriegerät des Computers und über eine virtuell auf einer Anzeigeeinrichtung des Computers erzeugten Eingabeeinrichtung eingegeben wird
und wobei anschließend ein Datenaustausch zwischen dem Sicherheitstoken und dem virtuellen Betriebssystem stattfindet.

Es liegt im Rahmen der Erfindung, dass es sich bei der Leseeinrichtung einerseits und bei dem Peripheriegerät des Computers andererseits um unterschiedliche Vorrichtungen bzw. Geräte handelt. - Der Identifikations - und/oder Authentisierungscode wird gemäß einer Ausführungsform in Form eines Zahlencodes und/oder Buchstabencodes und/oder in Form eines anderen Zeichencodes über eine Tastatur eingegeben. Andere Möglichkeiten für den Identifikations- und/oder Authentisierungscode werden weiter unten erläutert.

Virtuelle Maschine meint im Rahmen der Erfindung ein System bzw. ein Computerprogramm, das einen virtuellen Rechner auf einem vorhandenen Computer bzw. Rechner emuliert. Die auf dem Computer zu installierende virtuelle Maschine stellt erfindungsgemäß eine für die Token-Leseanwendung separate Systemplattform bereit. Eine solche virtuelle Maschine stellt eine eigenständige Ablaufumgebung dar, die im Wesentlichen unabhängig von dem eigentlichen Computersystem und dessen Wirtsbetriebssystem ist. Auf diese Weise können Fehlkonfigurationen, Viren, Trojaner und dergleichen effektiv abgeschirmt werden. Erfindungsgemäß steht die virtuelle Maschine ausschließlich für die Wechselwirkung bzw. für den Datenaustausch mit dem Sicherheitstoken zur Verfügung steht. Die virtuelle Maschine umfasst ein virtuelles Betriebssystem (Gastbetriebsystem) und insbesondere ein Token-Leseprogramm bzw. eine Token-Leseroutine. Das virtuelle Betriebssystem ist von dem eigentlichen Betriebssystem des Computers gleichsam abgekoppelt. - Virtuelle Maschinen (VM) sind dem Fachmann an sich bekannt. Der Erfindung liegt die Erkenntnis zugrunde, dass sich eine solche virtuelle Maschine optimal für die sichere Benutzung eines Sicherheitstokens eignet.

Der Sicherheitstoken steht in Datenübertragungsverbindung mit der Leseeinrichtung. Es liegt dabei im Rahmen der Erfindung, dass der Sicherheitstoken in die Leseeinrichtung eingesteckt wird. So wird insbesondere eine Chipkarte in eine Leseeinrichtung eingesteckt, die hierzu in an sich bekannter Weise einen Einführschlitz aufweist. - Die Leseeinrichtung steht in Datenübertragungsverbindung mit dem Computer. Dabei ist die Leseeinrichtung gemäß einer Ausführungsform über eine Kabelverbindung an den Computer angeschlossen und beispielsweise an den USB-Port des Computers angeschlossen. Gemäß einer anderen Ausführungsform steht die Leseeinrichtung in drahtloser Datenübertragungsverbindung mit dem Computer. Die entsprechenden Daten werden dann also über Funk übermittelt. Der Sicherheitstoken kann auch unmittelbar in den Computer bzw. in den USB-Port des Computers eingesteckt werden. Das ist beispielsweise dann der Fall, wenn es sich bei dem Sicherheitstoken um einen USB-Stick handelt, der in den USB-Port des Computers eingesteckt wird. Bei solchen Ausführungsformen ist die Leseeinrichtung in den Token und damit über USB in den Computer integriert.

Es liegt im Rahmen der Erfindung, dass die Leseeinrichtung eine anzeigeeinrichtungsfreie und eine eingabeeinrichtungsfreie Leseeinrichtung ist. Mit Anzeigeeinrichtung ist vor allem ein Display oder ein Bildschirm gemeint, auf dem insbesondere der eingegebene Identifikations- und/oder Authentisierungscode angezeigt werden kann. Es liegt also im Rahmen der Erfindung, dass die erfindungsgemäße Leseeinrichtung eine solche Anzeigeeinrichtung nicht aufweist. Eingabeeinrichtung meint vor allem eine Eingabetastatur, mit der insbesondere der Identifikations- und/oder Authentisierungscode eingegeben wird. Es liegt somit im Rahmen der Erfindung, dass die erfindungsgemäße Leseeinrichtung eine solche Eingabeeinrichtung bzw. Eingabetastatur nicht aufweist. Das Lesegerät ist zweckmäßigerweise nur mit den für das Einlesen des Sicherheitstokens und mit den für das Weiterleiten der eingelesenen Daten erforderlichen Komponenten ausgestattet. Diese Komponenten müssen insbesondere die Betriebsspannung bereitstellen, die Einlesefunktion gewährleisten und die Funktion zumindest einer Kommunikationsschnittstelle gewähleisten.

Es wurde bereits weiter oben darauf hingewiesen, dass der Identifikations - und/oder Authentisierungscode gemäß einer Ausführungsform der Erfindung als Zahlencode und/oder Buchstabencode eingegeben wird. Es kann aber auch ein Code aus anderen Zeichen eingegeben werden. Zweckmäßigerweise wird der Identifikations- und/oder Authentisierungscode über Tasten eingegeben, wobei die Tasten Zahlen, Buchstaben oder anderen Zeichen zugeordnet sind.

Nach einer bevorzugten Ausführungsform der Erfindung wird der Identifikations - und/oder Authentisierungscode über die dem Computer zugeordnete Tastatur eingegeben. Die Eingabeeinrichtung bzw. das entsprechende Peripheriegerät des Computers ist also eine übliche Computertastatur, die dem Computer zugeordnet ist, auf dem die virtuelle Maschine installiert ist. Es liegt im Rahmen der Erfindung, dass auch weitere Eingaben, die im Zusammenhang mit der Benutzung des Sicherheitstokens gewünscht werden bzw. erforderlich sind über diese Computertastatur erfolgen.

Gemäß einer weiteren bevorzugten Ausführungsform der Erfindung wird der Identifikations- und/oder Authentisierungscode über eine virtuell auf einer Anzeigeeinrichtung des Computers erzeugten Eingabeeinrichtung eingegeben. Es liegt dabei im Rahmen der Erfindung, dass auch weitere Eingaben, die im Zusammenhang mit der Benutzung des Sicherheitstokens gewünscht werden bzw. erforderlich sind über diese virtuelle Eingabeeinrichtung erfolgen. Bei der Anzeigeeinrichtung handelt es sich zweckmäßigerweise um den Monitor bzw. Bildschirm des Computers. Die virtuell erzeugte Eingabeeinrichtung ist vorzugsweise eine auf der Anzeigeeinrichtung bzw. auf dem Monitor virtuell erzeugte Tastatur. Zweckmäßigerweise werden die Tasten der virtuell erzeugten Tastatur mit Hilfe eines Eingabegerätes des Computers, insbesondere mit Hilfe einer Maus per Mausklick ausgewählt. Nach einer bevorzugten Ausführungsform der Erfindung wird bei jeder Erzeugung der virtuellen Eingabeeinrichtung die Anordnung der virtuellen Tasten zufällig ausgewählt, d. h. mit Hilfe eines Zufallsgenerators. Es liegt auch im Rahmen der Erfindung, dass die Tastenanordnung der virtuellen Eingabeeinrichtung in bestimmten Zeitabständen neu und zufällig erzeugt wird.

Gemäß einer Ausführungsform der Erfindung wird der Identifikations- und/oder Authentisierungscode in Form von biometrischen Daten über eine an den Computer angeschlossene Bio-Eingabeeinrichtung eingegeben. Bio-Eingabeeinrichtung meint eine Einrichtung zum Erfassen der biometrischen Daten bzw. zum Erfassen von biometrischen Informationen des jeweiligen Benutzers. Bei dieser Ausführungsform ist also die Bio-Eingabeeinrichtung das Peripheriegerät des Computers über das der Code eingegeben wird. Die Bio-Eingabeeinrichtung ist nach einer Ausführungsvariante ein Fingerprint-Lesegerät, das den Fingerabdruck eines Benutzers erfassen kann und die entsprechenden Daten bzw. Informationen an den angeschlossenen Computer bzw. an das virtuelle Betriebssystem auf dem Computer weiterleiten kann. Der Identifikations- und/oder Authentisierungscode besteht hier also aus den Daten/Informationen über den Fingerabdruck des Benutzers. Die übrigen Eingaben können bei dieser Ausführungsform über ein anderes Peripheriegerät des Computers erfolgen, zweckmäßigerweise über eine der oben bereits erläuterten Eingabeeinrichtungen.

Nach sehr bevorzugter Ausführungsform der Erfindung wird die anderweitige Benutzung des Peripheriegerätes während einer Identifikations- bzw. Authentisierungsphase durch die virtuelle Maschine blockiert. Das heißt, dass die Eingabeeinrichtung, beispielsweise die Tastatur lediglich für die Benutzung des Sicherheitstokens zur Verfügung steht und für andere Anwendungen blockiert ist. Diese Blockierung bzw. Reservierung der Eingabeeinrichtung erfolgt zweckmäßigerweise über eine Software des virtuellen Betriebssystems bzw. der virtuellen Maschine.

Es liegt im Rahmen der Erfindung, dass die Eingabe des Identifikations - und/oder Authentisierungscodes und die eventuellen weiteren Eingaben ausschließlich von der virtuellen Maschine bzw. von dem virtuellen Betriebssystem bearbeitet/verarbeitet werden. Es liegt weiterhin im Rahmen der Erfindung, dass lediglich die virtuelle Maschine bzw. das virtuelle Betriebssystem Daten zu dem Sicherheitstoken weiterleiten kann und/oder Daten des Sicherheitstokens einlesen kann und/oder Daten zu einer übergeordneten Zentrale bzw. zu einem Zentralrechner weiterleiten kann.

Es empfiehlt sich, dass nach einem kryptographischen Verfahren verschlüsselte Daten von der virtuellen Maschine bzw. von dem virtuellen Betriebssystem an den Sicherheitstoken übermittelt werden. Solche kryptographischen Verfahren sind an sich bekannt. Im Rahmen der Erfindung wird dadurch eine sehr sichere Datenübertragung gewährleistet. Es empfiehlt sich weiterhin, dass nach einem kryptographischen Verfahren verschlüsselte Daten von dem Sicherheitstoken an die virtuelle Maschine bzw. an das virtuelle Betriebssystem übermittelt werden. Der kryptographisch geschützten Datenkommunikation kommt im Rahmen der Erfindung wesentliche Bedeutung zu. Die Übermittlung von nach kryptographischen Verfahren verschlüsselten Daten ist insbesondere dann wichtig, wenn Daten von der Leseeinrichtung über größere Distanzen an den Computer übermittelt werden sollen. Zur Verwirklichung der kryptographisch geschützten Kommunikation kann ein sogenannter Secure-Messaging-Kanal auf Basis symmetrischer Kryptographie etabliert werden. Eine bösartige Software (Malware), die außerhalb der virtuellen Maschine im Wirtsbetriebssystem des mit dem Sicherheitstoken kommunizierenden Computers vorhanden sein könnte, hat so beispielsweise keine Möglichkeit, die Datenkommunikation abzufangen und umzuleiten. Auf diese Weise können Fehlkonfigurationen, Viren, Trojaner und dergleichen effektiv abgeschirmt werden.

Eine besondere Ausführungsform der Erfindung ist dadurch gekennzeichnet, dass die virtuelle Maschine bzw. das virtuelle Betriebssystem von dem Sicherheitstoken auf den Computer geladen wird. Mit anderen Worten enthält der Sicherheitstoken die Software, die zur Installation der virtuellen Maschine bzw. des virtuellen Betriebssystems auf dem Computer erforderlich ist. Diese Software wird dann von dem Sicherheitstoken auf den Computer geladen. Die Software befindet sich also beispielsweise auf einer als Sicherheitstoken eingesetzten Chipkarte.

Der Erfindung liegt die Erkenntnis zugrunde, dass mit dem erfindungsgemäßen Verfahren eine sehr sichere Eingabe und Ausgabe bzw. Anzeige von Daten/Informationen möglich ist. Auf einem handelsüblichen Computer kann mit Hilfe der Virtualisierungstechnik eine Token-Leseanwendung bzw. eine Chipkarten-Leseanwendung sicher von anderen Anwendungen abgeschottet werden, die nicht für den Einsatz des Sicherheitstokens bestimmt sind. Durch die erfindungsgemäße Virtualisierung wird ein sehr hohes Maß an Sicherheit erreicht. Alle für die Benutzung des Sicherheitstokens erforderlichen Eingabefunktionen und Ausgabefunktionen werden vorzugsweise von der virtuellen Maschine kontrolliert. Der Erfindung liegt weiterhin die Erkenntnis zugrunde, dass ein Lesegerät mit aufwendigen Eingabe- und Ausgabeeinheiten für die Eingabe bzw. Ausgabe von Daten nicht erforderlich ist. Durch den Einsatz der erfindungsgemäßen Virtualisierungstechnik kann vielmehr mit einem kostengünstigen Lesegerät ohne aufwendige Eingabe- und Ausgabeeinheiten gearbeitet werden. Der Erfindung liegt hier die Erkenntnis zugrunde, dass die Eingabeeinheiten und Ausgabeeinheiten an den bekannten Lesegeräten eigentlich überflüssig sind, da ein mit dem Lesegerät verbundener handelsüblicher Computer ohnehin bereits über Eingabe- und Ausgabekomponenten bzw. Anzeigekomponenten verfügt, die mit Hilfe der erfindungsgemäßen Virtualisierungstechnik unter Gewährleistung eines hohen Maßes an Sicherheit verwendet werden können. Insoweit erlaubt die Erfindung in sehr vorteilhafter Weise die Benutzung von Sicherheitstoken mit kostengünstiger Hardware.

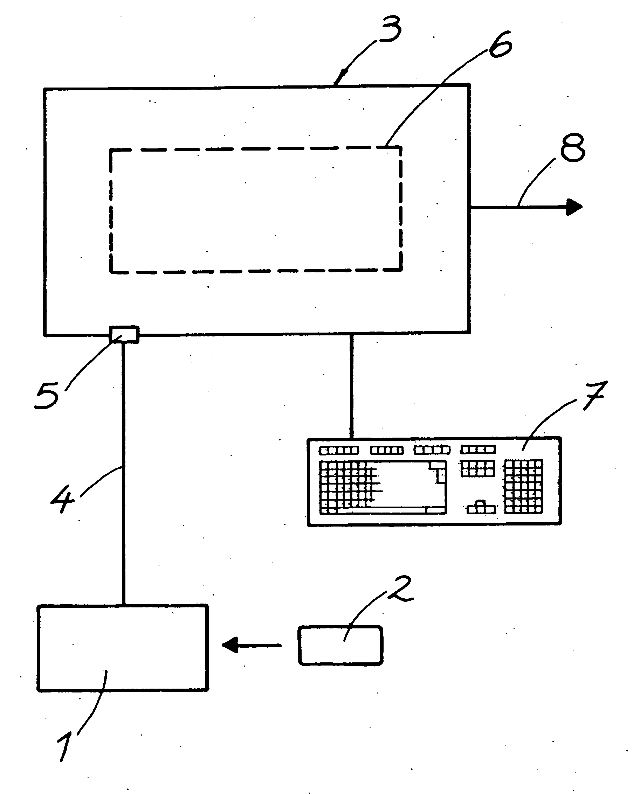

Nachfolgend wird die Erfindung anhand einer ein Ausführungsbeispiel darstellenden Zeichnung näher erläutert. Die einzige Figur zeigt schematisch eine Vorrichtung zur Durchführung des erfindungsgemäßen Verfahrens zur Benutzung von Sicherheitstoken.

Es ist eine Leseeinrichtung 1 (Kartenleser) vorgesehen, der in Datenübertragungsverbindung mit einer Chipkarte 2 (Sicherheitstoken) gebracht wird, indem die Chipkarte 2 in einen nicht näher dargestellten Einführungsschlitz der Leseeinrichtung 1 eingeführt wird. Das ist in der Figur durch einen Pfeil angedeutet worden. Die Leseeinrichtung 1 steht in Datenübertragungsverbindung mit einem Computer 3, indem die Leseeinrichtung 1 über ein Kabel 4 an den USB-Port 5 des Computers 3 angeschlossen ist. Die Daten könnten auch kabel- bzw. drahtlos über Funk von der Leseeinrichtung 1 an den Computer 3 übermittelt werden. Auf dem Computer 3 ist vorübergehend eine virtuelle Maschine 6 installiert, die ein virtuelles Betriebssystem umfasst. Über die Tastatur 7 des Computers 3 wird ein Identifikations- bzw. Authentisierungscode in Form eines Zahlencodes eingegeben. Anschließend kann ein Datenaustausch zwischen der Chipkarte 2 und der virtuellen Maschine 6 bzw. dem virtuellen Betriebssystem stattfinden. Der Pfeil 8 deutet im Übrigen die Internetanbindung des Computers 3 an. Über das Internet steht der Computer 3 insbesondere mit einem Zentralrechner, beispielsweise mit dem Zentralrechner einer Bank in Verbindung.

Ein besonders bevorzugtes Ausführungsbeispiel der Erfindung ist der Einsatz des erfindungsgemäßen Verfahrens beim Internet-Banking. Hier kommt vorzugsweise eine als Bankkarte ausgeführte Chipkarte als Sicherheitstoken zum Einsatz. Der Bankkunde kann ein einfaches kostengünstiges Lesegeräte ohne Eingabeeinrichtung und Anzeigeeinrichtung für diese Chipkarte verwenden. Dieses Lesegerät kann der Bankkunde dann an seinen herkömmlichen Computer anschließen. Zweckmäßigerweise wird dann die virtuelle Maschine von der Chipkarte auf den Computer geladen und der Bankkunde betreibt dann das Internet-Banking nach dem oben beschriebenen Verfahren. Aufgrund der erfindungsgemäßen Vorteile, kann der Bankkunde das Internet-Banking mit kostengünstiger Hardware betreiben und nichtsdestoweniger ist ein sehr hohes Maß an Sicherheit gewährleistet. Mit dem erfindungsgemäßen Verfahren kann ein "Ausforschen" geheimer Authentisierungsdaten effektiv verhindert werden.

Das erfindungsgemäße Verfahren kann auch für eine web-basierte Anwendung eingesetzt werden. Von besonderer Bedeutung ist der Einsatz des erfindungsgemäßen Verfahrens für digitale Signaturen. Das erfindungsgemäße Verfahren kann in sehr sicherer Weise zur elektronischen Signatur eines Dokumentes angewendet werden. Zur Willensbekundung der Signatur wird das entsprechende Dokument angezeigt, insbesondere auf dem Monitor des Computers angezeigt und durch Eingabe des Identifikations- bzw. Authentisierungscodes wird der Signaturvorgang in Gang gesetzt. Auch bei dieser Anwendung kann eine manipulierte Darstellung des zu signierenden Dokumentes bzw. ein "Ausforschen" geheimer Authentisierungsdaten effektiv verhindert werden.

## Patentansprüche

1. Verfahren zur Benutzung von Sicherheitstoken, wobei ein Sicherheitstoken (2) in Datenübertragungsverbindung mit einer Leseeinrichtung (1) gebracht wird, wobei die Leseeinrichtung (1) in Datenübertragungsverbindung mit einem Computer (3) steht und über eine Kabelverbindung oder drahtlos an den Computer angeschlossen ist,
wobei auf dem Computer (3) eine virtuelle Maschine (6) vorübergehend installiert wird, wobei diese virtuelle Maschine (6) ein virtuelles Betriebssystem umfasst,
wobei die auf dem Computer (3) zu installierende virtuelle Maschine (6) eine für die Token-Leseanwendung separate Systemplattform bereitstellt,
wobei die virtuelle Maschine (6) ausschließlich für die Wechselwirkung bzw. für den Datenaustausch mit dem Sicherheitstoken (2) zur Verfügung steht,
wobei ein Identifikations- und/oder Authentisierungscode über ein Peripheriegerät des Computers (3) und über eine virtuell auf einer Anzeigeeinrichtung des Computers (3) erzeugten Eingabeeinrichtung eingegeben wird
und wobei anschließend ein Datenaustausch zwischen dem Sicherheitstoken (2) und dem virtuellen Betriebssystem stattfindet.

2. Verfahren nach Anspruch 1, wobei der Sicherheitstoken (2) in die Leseeinrichtung (1) eingesteckt wird.

3. Verfahren nach einem der Ansprüche 1 oder 2, wobei die Leseeinrichtung (1) eine anzeigeeinrichtungsfreie und/oder eine eingabeeinrichtungsfreie Leseeinrichtung ist.

4. Verfahren nach einem der Ansprüche 1 bis 3, wobei der Identifikations - und/oder Authentisierungscode über die dem Computer (3) zugeordnete Tastatur (7) eingegeben wird.

5. Verfahren nach einem der Ansprüche 1 bis 3, wobei der Identifikations - und/oder Authentisierungscode in Form von biometrischen Daten über eine an den Computer (3) angeschlossene Bio-Eingabeeinrichtung eingegeben wird.

6. Verfahren nach einem der Ansprüche 1 bis 5, wobei die Benutzung des Peripheriegerätes während einer Identifikations- bzw. Authentisierungsphase durch die virtuelle Maschine (6) blockiert wird.

7. Verfahren nach einem der Ansprüche 1 bis 6, wobei nach einem kryptographischen Verfahren verschlüsselte Daten von der virtuellen Maschine (6) an den Sicherheitstoken (2) übermittelt werden.

8. Verfahren nach einem der Ansprüche 1 bis 7, wobei nach einem kryptographischen Verfahren verschlüsselte Daten von dem Sicherheitstoken (2) an die virtuelle Maschine (6) übermittelt werden.

9. Verfahren nach einem der Ansprüche 1 bis 8, wobei die virtuelle Maschine (6) bzw. das virtuelle Betriebssystem von dem Sicherheitstoken (2) auf den Computer (3) geladen wird.

## Claims

1. A method for using security tokens, wherein a security token (2) is connected for data transmission to a reader (1), wherein the reader (1) is connected for data transmission to a computer (3) and is hooked up to the computer via a wired connection or wirelessly,
wherein a virtual machine (6) is temporarily installed on the computer (3), wherein this virtual machine (6) comprises a virtual operating system,
wherein the virtual machine (6) to be installed on the computer (3) provides a separate system platform for the token reader application,
wherein the virtual machine (6) is available exclusively for interaction or for data exchange with the security token (2),
wherein an identification and/or authentication code is input via a peripheral device of the computer (3) and via an input device generated on a display device of the computer (3)
and wherein a data exchange between the security token (2) and the virtual operating system subsequently takes place.

2. The method according to Claim 1, wherein the security token (2) is plugged into the reader (1).

3. The method according to one of Claims 1 or 2, wherein the reader (1) is a reader which does not have a display and/or does not have an input device.

4. The method according to one of Claims 1 to 3, wherein the identification and/or authentication code is input via the keyboard (7) assigned to the computer (3).

5. The method according to one of Claims 1 to 3, wherein the identification and/or authentication code is input in the form of biometric data via a bio-input device hooked up to the computer (3).

6. The method according to one of Claims 1 to 5, wherein the use of the peripheral device is blocked by the virtual machine (6) during an identification or authentication phase.

7. The method according to one of Claims 1 to 6, wherein encrypted data are transmitted from the virtual machine (6) to the security token (2) in accordance with a cryptographic method.

8. The method according to one of Claims 1 to 7, wherein encrypted data are transmitted from the security token (2) to the virtual machine (6) in accordance with a cryptographic method.

9. The method according to one of Claims 1 to 8, wherein the virtual machine (6) or the virtual operating system is loaded onto the computer (3) by the security token (2).

## Revendications

1. Procédé d'utilisation de jetons de sécurité, dans lequel un jeton de sécurité (2) est amené en liaison de transmission de données avec un dispositif de lecture (1), dans lequel le dispositif de lecture (1) se trouve en liaison de transmission de données avec un ordinateur (3) et est raccordé par l'intermédiaire d'une liaison câblée ou sans fil à l'ordinateur,
dans lequel sur l'ordinateur (3) une machine virtuelle (6) est installée à titre transitoire, dans lequel cette machine virtuelle (6) comprend un système d'exploitation virtuel,
dans lequel la machine (6) à installer sur l'ordinateur (3) fournit une plateforme de système séparée pour l'application de lecture de jeton,
dans lequel la machine virtuelle (6) est disponible exclusivement pour l'interaction, respectivement pour l'échange de données avec le jeton de sécurité (2),
dans lequel un code d'identification et/ou d'authentification est entré par l'intermédiaire d'un périphérique de l'ordinateur (3) et par l'intermédiaire d'un dispositif d'entrée généré virtuellement sur un dispositif d'affichage de l'ordinateur (3)
et dans lequel un échange de données a ensuite lieu entre le jeton de sécurité (2) et le système d'exploitation virtuel.

2. Procédé selon la revendication 1, dans lequel le jeton de sécurité (2) est enfiché dans le dispositif de lecture (1).

3. Procédé selon une des revendications 1 ou 2, dans lequel le dispositif de lecture (1) est un dispositif de lecture exempt de dispositif d'affichage et/ou exempt de dispositif d'entrée.

4. Procédé selon une des revendications 1 à 3, dans lequel le code d'identification et/ou d'authentification est entré par l'intermédiaire du clavier (7) coordonné à l'ordinateur (3).

5. Procédé selon une des revendications 1 à 3, dans lequel le code d'identification et/ou d'authentification est entré sous forme de données biométriques par l'intermédiaire d'un dispositif d'entrée biométrique branché à l'ordinateur (3).

6. Procédé selon une des revendications 1 à 5, dans lequel l'utilisation du périphérique est bloquée pendant une phase d'identification, respectivement d'authentification par la machine virtuelle (6).

7. Procédé selon une des revendications 1 à 6, dans lequel des données cryptées selon un procédé cryptographique sont transmises par la machine virtuelle (6) au jeton de sécurité (2).

8. Procédé selon une des revendications 1 à 7, dans lequel des données cryptées selon un procédé cryptographique sont transmises du jeton de sécurité (2) à la machine virtuelle (6).

9. Procédé selon une des revendications 1 à 8, dans lequel la machine virtuelle (6), respectivement le système d'exploitation virtuel est chargé à partir du jeton de sécurité (2) sur l'ordinateur (3).
